(19) Europäisches Patentamt
European Patent Office
Office européen des brevets

(11) Publication number: 0 149 192
A2

(12) # EUROPEAN PATENT APPLICATION

(21) Application number: 84115918.9

(22) Date of filing: 20.12.84

(51) Int. Cl.[4]: C 08 L 67/02
//(C08L67/02, 63:08, 69:00)

(30) Priority: 29.12.83 US 566625

(43) Date of publication of application:
24.07.85 Bulletin 85/30

(84) Designated Contracting States:
DE FR GB IT NL

(71) Applicant: GENERAL ELECTRIC COMPANY
1 River Road
Schenectady New York 12305(US)

(72) Inventor: Hepp, Leonard Richard
5206 Bridgeview Drive
Evansville Indiana 47712(US)

(74) Representative: Schüler, Horst, Dr. et al,
Kaiserstrasse 41
D-6000 Frankfurt/Main 1(DE)

(54) **Epoxidized epdm as impact modifier for thermoplastic polyester.**

(57) An impact modified thermoplastic molding composition having improved compatibility and other physical properties such as flexural strength, tensile strength and flexural modulus is provided, the composition comprising (1) a thermoplastic resin selected from the group consisting of a high-molecular weight linear polyester, a high-molecular weight copolyester and a high-molecular weight block copolyester, (2) from about 5 to 25% by weight, based on the total composition, of epoxidized EPDM; and (3) optionally, 5 to 25% by weight, based on the total composition, of an aromatic polycarbonate resin and/or up to about 50% by weight, based on the total composition, glass filaments or other reinforcing agents.

EP 0 149 192 A2

# EPOXIDIZED EPDM AS IMPACT MODIFIER FOR THERMOPLASTIC POLYESTER

Leonard Richard Hepp

This invention relates to improved impact modified thermoplastic molding compositions and, more particularly, to improved impact modified thermoplastic polyester, copolyester and polyblend molding compositions.

High molecular weight linear polyesters and copolyesters of glycols and terephthalic or isophthalic acid have been available for a number of years. These are described inter alia in Whinfield et al, U.S. Patent No. 2,465,319, and in Pengilly, U.S. Patent No. 3,047,539, incorporated herein by reference. These patents disclose that the polyesters are particularly advantageous as film and fiber formers.

With the development of molecular weight control, the use of nucleating agents and two-step molding cycles, poly(ethylene terephthalate) has become an important constituent of injection moldable compositions. Further, poly(1,4-butylene terephthalate), because of its very rapid crystallization from the melt, is uniquely useful as a component in such compositions. Work pieces molded from such polyester resins, in comparison with other thermoplastics, offer a high degree of surface hardness and abrasion resistance, high gloss and lower surface friction.

Furthermore, in particular, poly(1,4-butylene terephthalate) is much simpler to use in injection molding techniques than poly(ethylene terephthalate). For example, it is possible to injection mold poly(1,4-butylene terephthalate) at low mold temperatures of from about 30° to 60°C to produce highly crystalline, dimensionally stable moldings in short

cycle times. Because of the high rate of crystallization, even at low temperatures, no difficulty is encountered in removing the moldings from the molds. Additionally, the dimensional stability of poly(1,4-butylene terephthalate) injection moldings is very good even at temperatures near or well above the glass temperature of poly(1,4-butylene terephthalate).

However, because of the relatively high glass temperature, the impact resistance falls at a relatively steep rate at temperatures below 20°C. Thus for many applications, it is desirable to have polyesters which are impact resistant at relatively high and relatively low ambient temperatures. Yet, the other mechanical properties such as modulus for elasticity, tensile strength at yield and at break should be impaired either not at all or only to an acceptable degree.

It has been recommended in various places to improve the impact resistance of polyesters by adding other polymers including interpolymers and copolymers. Specifically, impact strength of thermoplastic linear crystalline polyesters, including poly(1,4-butylene terephthalate), have been improved by the incorporation therein of an ethylene-propylene nonconjugated diene rubbery terpolymer (EPDM). Although EPDM is capable of impact-modifying PBT polyester compositions, e.g., Coran et al U.S. Patent No. 4,141,863 and Tanaka et al U.S. Patent No. 4,290,927, such compositions often suffer from "incompatibility" resulting in streaks or delamination of molded or extruded parts.

It has now been discovered that if EPDM is modified by epoxidation with, for example, m-chloroperoxy-benzoic acid, a white rubbery material is obtained which now shows impact modification for

PBT and PBT/polyester blends as well as good compatibility with the compositions as evidenced by an absence of streaks or delamination in molded parts.

It has also been discovered that the incorporation in the PBT or PBT/polyester blends of epoxidized EPDM allows for the retention of improved impact properties (notched and unnotched izod) and improves various other properties of the composition including flexural strength, tensile strength and flexural modulus.

## Summary of the Invention

According to this invention, there are provided thermoplastic compositions which are useful for molding or extrusion, e.g., injection molding, injection blow molding, compression molding, transfer molding, profile extrusion, sheet extrusion, wire coating, extrusion blow molding and the like, the compositions having improved compatibility and other physical properties after molding such as flexural strength, tensile strength and flexural modulus, as well as good impact strength, comprising:

(a) a high-molecular weight thermoplastic polyester resin;

(b) an effective amount of epoxidized EPDM for impact modification;

(c) optionally, an effective amount of a second thermoplastic polymer selected to enhance surface characteristics and/or compatibility; and,

(d) optionally, an effective amount of a reinforcing agent.

Specifically, the composition of the invention comprises:

(a) a high-molecular weight thermoplastic polyester resin selected from the group consisting of:

(i) poly(1,4-butylene terephthalate);

(ii) an aliphatic/aromatic copolyester derived from one or more dicarboxylic acids selected from the group consisting essentially of terephthalic acid, isophthalic acid, naphthalene dicarboxylic acids, phenyl indane dicarboxylic acid and compounds of the formula:

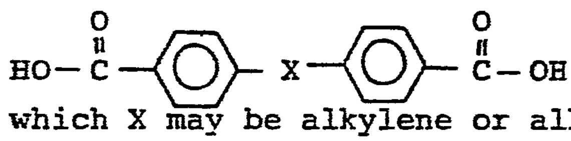

in which X may be alkylene or alkylidene of from 1 to 4 carbon atoms, carbonyl, sulfonyl, oxygen or a bond between the benzene rings, and an aliphatic dicarboxylic acid having from 6 to 12 carbon atoms in the chain and 1 or more straight or branched chain dihydric aliphatic or cycloaliphatic glycols having from 2 to 10 carbon atoms in the chain, wherein, preferably, at least 50% of the copolymer is poly(1,4-butylene terephthalate);

(iii) a block copolyester derived from terminally reactive blocks of (i) and (ii), wherein said copolyester (ii) has at least 10% of aliphatic unit being derived from a dicarboxylic acid, or a terminally reactive aliphatic polyester of a straight chain dicarboxylic acid having from 2 to 12 carbon atoms in the chain and a straight or branched chain aliphatic glycol, said blocks being connected by interterminal linkages consisting essentially of ester linkages;

(iv) polyethylene terephthalate; or

(v) blends of i, ii, iii and iv or any combination thereof.

(b) 5 to 25%, preferably 10 to 20%, by weight based on the composition of epoxidized EPDM;

(c) optionally, 5 to 25%, preferably 10 to 20%, by weight based on the composition of a second thermoplastic polymer consisting essentially of an aromatic polycarbonate resin; and

(d) optionally, 0 to 50%, preferably 5 to 40%, by weight based on the composition of a reinforcing agent.

## Detailed Description of the Invention

The high-molecular weight linear polyesters used in the practice of the present invention are polymeric glycol esters of terephthalic acid and isophthalic acid. They are available commercially or can be prepared by known techniques, such as by the alcoholysis of esters of phthalic acid with a glycol and subsequent polymerization, by heating glycols with free acids or with halide derivatives thereof, and similar processes. These are described in U.S. Patent No. 2,465,319 and U.S. Patent No. 3,047,539, and elsewhere.

Although the glycol portion of the polyester can contain from 2 to 10 carbon atoms, it is preferred that it contain from 2 to 4 carbon atoms in the form of linear methylene chains.

Preferred polyesters will be of the family consisting of high molecular weight, polymeric glycol terephthalates or isophthalates having repeating units of the general formula:

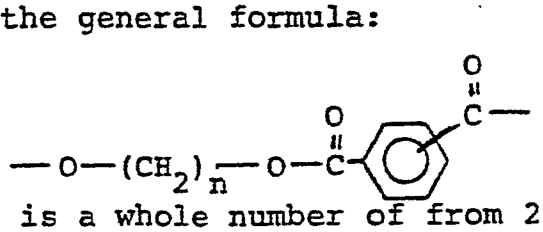

wherein n is a whole number of from 2 to 4, and mixtures of such esters, including copolyesters of terephthalic and isophthalic acids of up to about 30 mole percent isophthalic units.

Especially preferred polyesters are poly(ethylene terephthalate) and poly(1,4-butylene terephthalate). Special mention is made of the latter because it crystallizes at such a good rate that it may be used for injection molding without the need for nucleating agents or long cycles, as is sometimes necessary with poly(ethylene terephthalate).

Illustratively, high molecular weight polyesters will have an intrinsic viscosity of at least about 0.7 deciliters/gram and, preferably, at least 0.8 deciliters/gram as measured in a 60:40 phenol-tetrachloroethane mixture at 30°C. At intrinsic viscosities of at least about 1.0 deciliters/gram, there is a further enhancement of toughness of the present compositions.

Copolyesters useful for the invention are preferably prepared from terephthalic acid and/or isophthalic acid and/or a reactive derivatives thereof and one or more glycols, which may be a straight or branched chain aliphatic/cycloaliphatic glycol. Illustratively, the glycol will be ethylene glycol; 2-methyl-1,3 propanediol, 1,4-butanediol; 1,5-pentanediol; 1,6-hexanediol; 1,9-nonanediol; 1,10-decanediol; neopentylglycol; 1,4-cyclohexanediol; 1,4-cyclohexanedimethanol; a mixture of any of the foregoing, or the like. Illustrative of suitable aliphatic dicarboxylic acids for the mixed aromatic/aliphatic embodiments are suberic, sebacic, azelaic, and adipic acids and the like.

The copolyesters may be prepared by ester interchange in accordance with the standard procedures. The copolyesters may preferably be derived from at least 50% butylene terephthalate units.

The block copolyesters useful in the composition of this invention are prepared by the reaction of terminally reactive poly(1,4-butylene terephthalate),

preferably of low molecular weight, and a terminally reactive copolyester or aliphatic polyester or both in the presence of a catalyst for transesterification, such as zinc acetate, manganese acetate, titanium esters, and the like. The terminal groups can comprise hydroxyl, carboxyl, carboalkoxy, and the like, including reactive derivatives thereof. After initial mixing, polymerization is carried out under standard conditions, e.g., 220° to 280°C, in a high vacuum, e.g., 0.1 to 2 mm Hg, to form the block copolymer of minimum randomization in terms of distribution of chain segments. The result of reaction between two terminally reactive groups, of course, must be an ester linkage. These copolyesters are described in German patent application P 27 56 167.7 ———————————————— incorporated herein by reference.

The copolyester designated component of these block copolyesters may be terminally reactive segments of copolyesters as described above. These copolyesters are most preferably derived from an aliphatic glycol and a mixture of aromatic and aliphatic dibasic acids in which the mole ratio concentration of aromatic to aliphatic acids is from between 1 to 9 to about 9 to 1, with an especially preferred range being from about 3 to 7 to about 7 to 3.

The terminally reactive aliphatic polyester component of these block copolyesters will contain substantially stoichiometric amounts of the aliphatic diol and the aliphatic dicarboxylic acid, although hydroxy-containing terminal groups are preferred.

In addition to their ease of formation by well known procedures, both the aforementioned aromatic/aliphatic copolyesters and aliphatic polyesters are commercially available. One source

for such materials is the Ruco Division/Hooker Chemical Company, Hicksville, New York, which designates its compounds as "Rucoflex".

The block copolyesters used in the invention preferably comprise from about 95 to about 50 parts by weight based on the block copolyester of poly(1,4-butylene terephthalate) segments. The poly(1,4-butylene terephthalate) blocks, before incorporation into the block copolyesters, will preferably have an intrinsic viscosity of about 0.1 dl./g. and, preferably, between about 0.1 and about 0.5 dl./g., as measured in a 60:40 mixture of phenol-tetrachloroethane at 30°C. The balance 50 to 5 parts by weight of the copolyester will comprise blocks of the aforementioned aromatic/aliphatic copolyesters and/or aliphatic polyesters.

As will be understood by those skilled in the art, the poly(1,4-butylene terephthalate) block can be straight chain or branched, e.g., by use of a branching component, e.g., from about 0.05 to about 1 mole percent, based on terephthalate units of a branching component which contains at least 3 ester-forming groups. This can be a polyol, e.g., pentaerythritol, trimethylol-propane, and the like or a polybasic acid compound, e.g., trimethyl trimestate, and the like.

Blends of the foregoing homopolymers, copolymers and/or block copolymers or derivatives thereof are also useful for the invention.

The "epoxidized EPDM" terpolymer additives of this invention may be prepared from any of the well known EPDM terpolymer rubbers. EPDM terpolymers useful for the invention are commercially available, e.g., Uniroyal Co. - (Royalene IM 7100), or may be prepared using a Ziegler-type catalyst. The preparation of typical EPDM terpolymers is described, for

example, in Gresham et al, U.S. Patent No. 2,933,480; Tarney, U.S. Patent No. 3,000,866; Guglielmino et al, U.S. Patent No. 3,407,158; Gladding, U.S. Patent No. 3,093,621 and U.S. Patent No. 3,379,701. These terpolymers are characterized by the absence of chain or backbone unsaturation and the presence of sites of unsaturation in groups which are pendant to or are in cyclic structures outside of the main polymer chain.

Useful EPDM terpolymers for the production of the epoxidized EPDM terpolymer additives of this invention comprise ethylene, a $C_3$ to $C_{16}$ straight or branched chain alpha-olefin, preferably propylene, and a non-conjugated diolefin. Satisfactory non-conjugated dienes that may be used as the third monomer in the terpolymer include straight chain dienes such as 1,4-hexanediene, cyclic dienes such as cyclooctadiene and bridged cyclic dienes such as ethylidene norbornene.

Preferred EPDM terpolymers are comprised of about 75% by weight ethylene, about 23 to 25% by weight propylene and a minor amount of diene monomer, most preferably ethylidene norbornene. These EPDM terpolymers have a melt index of approximately 79m/10 min., mooney viscosity of approximately 78 and a gram weight of about 21600 as reported in grams over a 10 minute time frame.

Epoxidation of the aforementioned EPDM terpolymers may be accomplished by any of the known processes for epoxidation. Exemplary, but by no means limiting, means of epoxidation are disclosed in Mueller et al, U.S. Patent No. 3,155,638; Paepas et al, U.S. Patent No. 3,842,010; and Loveless et al, U.S. Patent No. 3, 448,174. Typically, the epoxidized polymer is made by subjecting the starting unsaturated terpolymer, i.e., the EPDM - to the action of any suitable conventional epoxidizing

agent. The choice of particular reagent or method used is one of economics and convenience and is not a limiting aspect of the invention; thus many variations known to those having skill in the art are applicable.

Commonly, the epoxidation is carried out in a solution in a conventional inert volatile organic solvent for the rubber. For example, the solvent may be a hydrocarbon, such as an aliphatic or cycloaliphatic hydrocarbon, e.g., hexane, cyclohexane, etc., or an aromatic hydrocarbon, e.g., benzene, toluene, and the like, or a halogen-substituted hydrocarbon, e.g., dichloroethylene. The concentration of the rubber in the solvent is in no way critical, and it may be mentioned by way of non-limiting example that solutions containing 5% or less to 40% or more may be used.

The epoxidizing agent is frequently a peroxy acid, expecially an organic peroxy acid, either aliphatic, as in peroxyacetic acid or aromatic, as in peroxybenzoic acid, including meta-chloro-perbenzoic acid. The amount of epoxidizing agent is not critical, and the optimum amount in any given case will depend upon such variables as the particular epoxidizing agent used, the degree of epoxidation desired, the particular starting rubber used (especially the degree of unsaturation of the starting rubber), and the like. Usually it is desirable that the amount of epoxidizing agent be roughly equivalent to the unsaturation in the starting rubber as determined by iodine number, although smaller amounts, e.g., 0.1 molar equivalent (especially when only partial epoxidation is desired), or larger amounts (e.g., 2-5 or more molar equivalent), may of course be used if desired.

The reaction conditions are not critical. The reaction proceeds at room temperature, but heat (e.g., 50-150°C or higher) may be applied to increase the rate of epoxidation. No special manipulation of the reaction mixture is necessary; for example, it is sufficient to simply stir the mixture, say for a period of 2-10 hours. The resulting epoxidized polymer may be recovered from the reaction solution in any suitable manner, for example, by precipitating it with a non-solvent.

Preferably, the improved compositions of the present invention also comprise a second thermoplastic polymer essentially consisting of an aromatic polycarbonate resin. The polycarbonate resin serves as an additional impact modifier and compatibilizer of the various ingredients of the compositions.

The polycarbonate resins that may be used in the composition of the invention include any of those known in the art. Generally speaking, the polycarbonates may be prepared by reacting a dihydric phenol with a carbonate precursor such as phosgene, a haloformate or a carbonate ester. Such carbonate polymers may be typified as possessing recurring structural units of the formula:

$$-O-A-O-\overset{\overset{O}{\|}}{C}-$$

where A is a divalent aromatic radical remaining after removed of the hydroxyl groups of the dihydric phenol employed in the polymer producing reaction. "High molecular weight" aromatic carbonate polymers refers to carbonate polymers having intrinsic viscosities (as measured in methylene chloride in deciliters/gram at 25 C) of greater than about 0.30.

The dihydric phenols which may be employed to provide such aromatic carbonate polymers are

mononulcear or polynuclear aromatic compounds, containing as functional groups, two hydroxyl radicals, each of which is attached directly to a carbon atom of an aromatic nucleus. Typical dihydric phenols are 2,2-bis(4-hydroxyphenyl)propane; 2,2-bis(4-hydroxyphenyl)pentane; 2,2-bis(4-hydroxy-3-methylphenyl)propane; 2,2-bis(4-hydroxy-3,5-dichlorophenyl)propane; 2,2-bis(4-hydroxy-3,5-dibromophenyl)propane; 1,1-bis(4-hydroxyphenyl)ethane; 4,4'-dihydroxy-3,3-dichlorodiphenylether. Most preferably, the polycarbonates to be used for the present invention are those prepared from 2,2-bis(4-hydroxyphenyl)propane.

A variety of additional dihydric phenols which may be employed to provide such carbonate polymers are disclosed in Goldberg, U.S. Patent No. 2,993,835, assigned to the assignee of the present invention.

It is, of course, possible to employ two or more different dihydric phenols or a dihydric phenol in combination with a glycol, a hydroxy or acid terminated polyester, or a dibasic acid in the event a carbonate copolymer rather than a homopolymer is desired for use in the practice of the invention. It should be understood that the term "polycarbonate resin" embraces within its scope carbonate copolymers.

Optionally, the compositions of the present invention may also contain a reinforcing amount, up to 50%, preferably 5 to 40%, by weight based on the total composition of a reinforcing agent such as glass, mica, clay and the like. Preferred reinforcing agents are glass fibers. For compositions ultimately to be employed for electrical uses, it is preferred to use fibrous glass filaments comprised of limealuminum borosilicate glass that is

soda free. This is commonly known as "E" glass. However, other glasses are useful where electrical properties are not so important, e.g., the low soda glass known as "C" glass. Most preferred, however, are "G" and "K" filaments of "E" glass because of their small diameter. The filaments are made by standard processes, e.g., steam or air blowing, flame blowing and mechanical pulling. The preferred filaments for plastics reinforcement are made by mechanical pulling. The filament diameters range from about 0.00012 to 0.00075 inch, but this is not critical to the present invention.

The length of the glass filaments and whether or not they are bundled into fibers and the fibers bundled into yarns, ropes or rovings, or woven into mats and the like, are also not critical to the invention. However, in preparing the present compositions, it is convenient to use filamentous glass in the form of chopped strands of from about 1/8 inch to about 1 inch long, preferably less than 1/4 inch long. In articles molded from the compositions, on the other hand, even shorter lengths will be encountered because, during compounding, considerable fragmentation will occur. This is desirable, however, because the best properties are exhibited by thermoplastic injection molded articles in which the filament lengths lie between about 0.000005 inch and 0.125 (1/8) inch.

Other preferred reinforcing agents that may be used alone or preferably in combination with fibrous glass are mica and clay. In addition to its reinforcing properties, mica and clay reduce warp in molded articles.

The compositions of the present invention are prepared in conventional ways. For example, the epoxidized EPDM and, optionally, a second

thermoplastic polymer and reinforcing agent, if used, are all put into an extrusion compounder with the thermoplastic polyester resin to produce molding pellets. The epoxidized EPDM, the second thermoplastic polyester and the reinforcing agent are then dispersed in a matrix of the thermoplastic polyester by the process. In another procedure, the epoxidized EPDM, the second thermoplastic polymer, and the reinforcing agent, if used, are mixed with the thermoplastic polyester resin by dry-blending, then either fluxed on a mill and comminuted or they are extruded and chopped. Alternatively, these ingredients can also be mixed with the powdered or granular thermoplastic polyester resin and directly molded, e.g., by injection or transfer molding techniques. Ordinarily, it is preferable to thoroughly free the thermoplastic resin and other ingredients from as much water as possible. However, it has recently been disclosed that thermoplastic polyester molding compositions may be prepared having a small moisture content. See Lu et al, U.S. Patent No. 4,351,758, herein incorporated by reference.

In addition, compounding should be carried out to insure that the residence time in the machine is short, the temperature is carefully controlled, the friction heat is utilized, and an intimate blend between the additives and the thermoplastic resin is obtained.

Although it is not essential, best results are obtained if the ingredients are precompounded, pelletized, and then molded. Precompounding can be carried out in conventional equipment. For example, after carefully pre-drying the thermoplastic polyester resin, e.g., at 125°C for 4 hours, a single screw extruder is fed with a dry blend of the polyester and the additive ingredients, the screw

employed having a long transition and metering section to insure melting. On the other hand, a twin screw extrusion machine, e.g., a 28mm Werner Pfleiderer machine can be fed with resin and additives at the feed port. In either case, a generally suitable machine temperature will be about 450°F to 570°F.

The precompounded composition can be extruded and cut up into molding components such as conventional granules, pellets, etc., by standard techniques.

The compositions of this invention can be molded in any equipment conventionally used for thermoplastic compositions. For example, with poly(1,4-butylene terephthalate) good results will be obtained in an injection molding machine, e.g., of the Newburry type with conventional cylinder temperature, e.g., 450°F and conventional mold temperatures, e.g., 150°F. On the other hand, with poly(ethylene terephthalate), because of the lack of uniformity of crystallization from interior to exterior of thick pieces, somewhat less conventional but still well known techniques can be used. For example, a nucleating agent such as a LIOH, sodium stearate, graphite or a metal oxide, e.g., ZnO or MgO can be included and standard mold temperature of from about 150°F to 230°F will be used.

It is to be understood that the foregoing compositions may contain other additives known in the art, including, but without limitation, fillers, nucleating agents, mold release agents, flow promoters, coloring agents, flame retardants, coupling agents, and stabilizers.

In order that those skilled in the art may better understand how to practice the present

invention, the following examples are given by way of illustration and not by way of limitation.

The following formulations were precompounded, extended up, pelletized and injection molded into test pieces in a Van Dorn injection molding machine. All amounts are in % by weight based on the total composition.

<u>Examples E1-E2 and Comparative Examples CE1-CE4</u>

Formulations demonstrating epoxidixed EPDM in glass filled and unfilled polyesters, ie. poly(butylene terephthalate) are presented in Table 1. Also shown are comparative examples demonstrating glass reinforced and unreinforced poly(butylene terephthalate) and poly(butylene terephthalate)/EPDM blend compositions.

Comparative examples CE1 and CE3 demonstrate the good physical properties of glass reinforced and non-reinforced poly(butylene terephthalate). However, certain applications require higher melt viscosities and more often and more importantly higher impact strength. Comparative examples CE2 and CE4 demonstrate the prior art teaching of improved impact strength in polyester compositions by the incorporation therein of EPDM terpolymer rubbers. However, EPDM modified polyester compositions result in a loss of other physical properties of the polyester and more detrimentally, causes streaks and/or delaminations in parts as a consequence of non-compatibility between the EPDM terpolymer and the polyester.

Examples E1 and E2 demonstrate the teachings of the present invention, ie. the incorporation of epoxidized EPDM terpolymer rubber as impact modifier in polyester compositions. As is evident from Table 1, these compositions have improved impact strength, as compared to unmodified polyester and greatly

improved melt viscosity with less detrimental effect on the other physical properties than experienced with normal EPDM. Most importantly, molded parts prepared from these compositions appeared to be free or essestially so, of streaks or delaminations.

TABLE 1

POLYESTER COMPOSITIONS WITH EPDM AND EPOXIDIZED EPDM*

| | CE1 | CE2 | E1 | CE3 | CE4 | E2 |
|---|---|---|---|---|---|---|
| Valox® 315 resin[a] | 99.85 | 79.85 | 79.85 | 69.85 | 57.85 | 57.85 |
| Glass (K-filament) | - | - | - | 30.0 | 30.0 | 30.0 |
| Royalene IM 7100[b] | - | 20.0 | - | - | 12.0 | - |
| Epoxidized IM 7100[c] | - | - | 20.0 | - | - | 12.0 |
| Notched Izod, ft. lb./in. | 1.2 | 1.9 | 1.6 | 2.2 | 2.9 | 2.6 |
| Unnotched Izod, ft. lb./in. | NB | NB | 19 | 13.0 | 13.3 | 12.9 |
| Flexural Strength, psi | 13500 | 7810 | 7920 | 24000 | 19670 | 19050 |
| Flexural Modulus, $10^5$, psi | 3.48 | 2.20 | 2.20 | 8.04 | 8.18 | 8.07 |
| Tensile Strength, psi | 7480 | 4860 | 4920 | 14810 | 12270 | 12300 |
| Specific Gravity | 1.31 | 1.21 | 1.21 | 1.52 | 1.34 | 1.35 |
| Melt Viscosity, poise @ 482°F | | | | | | |
| Pellets | 6790 | 10500 | 13700 | 28800 | 33060 | 46340 |
| Parts | 6130 | 10320 | 13590 | 19460 | 23400 | 30220 |
| Part appearance-streaks/ delamination | NO | YES | NO | NO | YES | SLIGHT+ |

[a]General Electric Company - poly(1,4 butylene terephthalate).

[b]Uniroyal Incorporated - EPDM terpolymer.

[c]Modified via epoxidation with m-chloroperoxybenzoic acid.

*All compositions contained 0.15% by weight phenolic antioxidant/stabilizer.

+Slight streaks and/or delamination was noted over unmodified compositions, but greatly improved as compared to EPDM modified compositions.

<u>Examples E3-E4, Comparative Examples CE5-CE6</u>

The formulatous shown in Table 2, demonstrate the applicability of the present invention to blend compositions, particularly polyester-polycarbonate blend compositions. Again comparative examples using non-epoxidixed EPDM are presented.

From Table 2, it is apparent that the use of Epoxidized EPDM (E3 and E4) once again result in improved compositions as compared to such blends with normal EPDM (CE5 and CE6). Specifically, it can be seen that impact strength is essentially the same for both EPDM and epoxidized EPDM, however, other physical properties, most notably flexural strength, flexural modulus, tensile strength and melt viscosity are all improved by the use of Epoxidized EPDM. Most importantly, once again, molded parts prepared with Epoxidized EPDM were free of streaks and/or deliminations.

TABLE 2

POLYESTER BLEND COMPOSITIONS WITH EPDM AND EPOXIDIZED EPDM*

| | CE5 | E3 | CE6 | E4 |
|---|---|---|---|---|
| VALOX 315 Resin[a] | 69.85 | 69.85 | 39.85 | 39.85 |
| LEXAN® 135 Resin[b] | 15.0 | 15.0 | 15.0 | 15.0 |
| Glass (K-filament) | - | - | 30.0 | 30.0 |
| Royalene IM 7100[c] | 15.0 | - | 15.0 | - |
| Expoxidized IM 7100[d] | - | 15.0 | - | 15.0 |
| Notched Izod, ft. lbs./in. (ASTM D256) | 1.8 | 1.4 | 3.9 | 3.8 |
| Unnotched Izod, ft. lbs./in. (ASTM D256) | 25.7 | 26.1 | 20.1 | 20.0 |
| Flexural Strength, psi (ASTM D790) | 7,900 | 8,700 | 16,700 | 17,800 |
| Flexural Modulus, $10^5$ psi (ASTM D790) | 2.58 | 2.61 | 7.22 | 7.60 |
| Tensile Strength, psi (ASTM D638) | 5,300 | 5,600 | 10,600 | 11,800 |
| Specific Gravity | 1.21 | 1.22 | 1.38 | 1.41 |
| Melt Viscosity, poise @ 510°F (ASTM D1238) | | | | |
| Pellets | 11,250 | 16,610 | 62,420 | 90,630 |
| Parts | 10,580 | 10,880 | 56,640 | 77,680 |
| Part Appearance, Streaks/Delamination | YES | NO | YES | NO |

[a] General Electric - poly(1,4-butylene terephthalate)

[b] General Electric - polycarbonate of bisphenol-A.

[c] Uniroyal Royalene® IM 7100 - EPDM terpolymer.

[d] Modified via epoxidation with m-chloroperoxybenzoic acid.

*All compositions contained 0.15% by weight phenolic antioxidant.

<u>Examples E5 and E6, Comparative Examples CE7-CE9</u>

The formulations as shown in Table 3 demonstrate the applicability of the teaching of the present invention to filled, specifically mica filled, polyester and polyester blend compositions.

Comparative examples CE7 through CE9 demonstrate once again the improved impact strength and melt viscosity achieved by the incoporation of EPDM. However, once again these compositions when molded into parts suffer from streaks and/or delaminations. The use of epoxidized EPDM as taught by the present invention, however, overcomes the problem of part appearance, enabling the production of molded parts which have no or essentially no apparent streaks and/or delaminations. Also, impact strength of these compositions is improved as well as other certain physical properties, as are evident from Table 3.

TABLE 3*

Silica and Glass filled Polyester Compositions with EPDM

| | CE7 | CE8 | E5 | CE9 | E6 |
|---|---|---|---|---|---|
| Valox 315 Resin[a] | 59.85 | 47.85 | 47.85 | 29.85 | 29.85 |
| Glass (K-filament) | 20.0 | 20.0 | 20.0 | 20.0 | 20.0 |
| Mica | 20.0 | 20.0 | 20.0 | 20.0 | 20.0 |
| Uniroyal IM 7100[b] | - | 12.0 | - | 10.0 | - |
| Epoxidized IM 7100[c] | - | - | 12.0 | - | 10.0 |
| Goodyear VFR-5900[d] | - | - | - | 20.0 | 20.0 |
| | | | | | |
| Notched Izod, ft. lbs./in. | 1.5 | 1.7 | 1.9 | 1.6 | 1.6 |
| Unnotched Izod, ft. lbs./in. | 8.1 | 8.4 | 8.8 | 9.6 | 9.0 |
| Flexural Strength, psi | 22,300 | 17,100 | 15,700 | 16,800 | 18,000 |
| Flexural Modulus, $10^5$ psi | 12.00 | 10.11 | 9.05 | 9.89 | 11.30 |
| Tensile Strength, psi | 13,250 | 9,810 | 9,370 | 9,940 | 10,700 |
| Specific Gravity | 1.63 | 1.56 | 1.56 | 1.55 | 1.58 |
| Melt Viscosity, poise @ 482°F | | | | | |
| Pellets | 37,500 | 60,360 | 96,200 | 25,300 | 23,230 |
| Parts | 23,910 | 40,500 | 44,660 | 20,470 | 18,630 |
| Part Appearance, Streaks/Delamination | NO | YES | SLIGHT+ | YES | NO |

a,b,c-See Table 1

d-Goodyear Tire and Rubber Company - polyethylene terephthalate

* All formulations contained 0.15% by weight phenolic antioxidant/stabilizer

\+ See Table 1

Other modifications and variations of the present invention are possible in light of the above teachings. It is, therefore, to be understood that changes may be made in the particular embodiments of the invention described which are within the full intended scope of the invention as defined by the appended claims.

CLAIMS:

1. An impact modified thermoplastic composition comprising (a) a high-molecular weight thermoplastic polyester resin and (b) an effective amount of an epoxidized EPDM terpolymer for impact modification.

2. The composition of Claim 1 wherein the epoxidized EPDM terpolymer is derived from approximately 75 mole percent ethylene, approximately 25 mole percent propylene and a minor amount of ethylidene norbornene.

3. The composition of Claim 1 wherein the epoxidized EPDM terpolymer is present in an amount of, approximately, 5 to 25 percent by weight based on the total composition.

4. The composition of Claim 1 wherein the epoxidized EPDM terpolymer is present in an amount of, approximately, 10 to 20 percent by weight based on the total composition.

5. The composition as defined in Claim 1 wherein the high-molecular weight thermoplastic polyester resin (a) is selected from the group consisting essentially of poly(ethylene terephthalate), poly(1,4-butylene terephthalate), copolyesters, or any combination thereof.

6. The composition of Claim 5 wherein the thermoplastic polyester resin (a) is poly(1,4-butylene terephthalate).

7. The composition of Claim 5 wherein the thermoplastic polyester resin (a) is poly(ethylene terephthalate).

8. The composition of Claim 5 wherein the thermoplastic polyester resin (a) is a copolyester derived from one or more aliphatic and/or aromatic dicarboxylic acids and one or more straight or branched chain aliphatic or cycloaliphatic glycols.

9. The composition of Claim 8 wherein the copolyester is a random copolyester.

10. The composition of Claim 8 wherein the copolyester is a block copolyester.

11. The composition of Claim 5 wherein the thermoplastic polyester resin (a) is a polyblend of poly(ethylene terephthalate) and poly(1,4-butylene terephthalate).

12. The composition of Claim 1 further comprising an effective amount of an aromatic polycarbonate for enhancement of impact strength and compatibility.

13. The composition of Claim 12 wherein the aromatic polycarbonate is derived from 2,2-bis(4-hydroxyphenyl)propane.

14. The composition as defined in Claim 12 wherein the aromatic polycarbonate comprises from about 5 to about 25% by weight of the composition.

15. The composition as defined in Claim 12 wherein the aromatic polycarbonate comprises from about 10 to about 20% by weight based on the composition.

16. The composition of Claim 1 further comprising a reinforcing amount of a reinforcing agent.

17. The composition as defined in Claim 16 wherein the reinforcing agent is fibrous glass.

18. The composition of Claim 16 wherein the reinforcing agent comprises up to about 50% by weight based on the composition.

19. The composition of Claim 16 wherein the reinforcing agent comprises from about 5 to about 45% by weight based on the composition.

20. The composition of Claim 12 further comprising a reinforcing amount of a reinforcing agent.

21. The composition of Claim 1 further comprising an effective amount of mica or clay for reinforcement and wrap reduction.

22. The composition of Claim 21 wherein the mica or clay comprises from about 5 to about 40% by weight based on the composition.

23. The composition of Claim 12 further comprising an effective amount of mica or clay for reinforcement and wrap reduction.

24. The composition of Claim 16 further comprising an effective amount of mica or clay for reinforcement and wrap reduction.

25. The composition of Claim 1 further comprising one or more additives selected from the group consisting of flame retardants, coupling agents, mold release agents, nucleating agents, stabilizers, flow promoters, fillers, drip retardants, and coloring agents, in effective amounts.

26. A process for producing an improved impact resistant thermoplastic molding composition comprising blending an effective amount of an epoxidized EPDM terpolymer for enhanced impact strength with a high-molecular weight thermoplastic polyester resin.

27. The process of Claim 26 wherein the high-molecular weight thermoplastic polyester resin is selected from the group consisting essentially of poly(ethylene terephthalate), poly(1,4-butylene terephthalate), a copolyester, or any combination thereof.

28. The process of Claim 26 wherein the high-molecular weight thermoplastic polyester is poly(1,4 butylene terephthalate).

29. The process of Claim 26 further comprising blending therewith an aromatic polycarbonate.

30. The process of Claim 28 wherein the aromatic polycarbonate is derived from 2,2-bis(4-hydroxyphenyl)propane.